(19) Europäisches Patentamt / European Patent Office / Office européen des brevets

(11) **EP 3 218 682 B1**

(12) **EUROPÄISCHE PATENTSCHRIFT**

(45) Veröffentlichungstag und Bekanntmachung des Hinweises auf die Patenterteilung:
**10.08.2022 Patentblatt 2022/32**

(21) Anmeldenummer: **15820047.7**

(22) Anmeldetag: **13.11.2015**

(51) Internationale Patentklassifikation (IPC):
*G01J 3/10* (2006.01)  *G01J 3/46* (2006.01)
*G01J 3/50* (2006.01)  *G01N 21/25* (2006.01)
*G01N 21/27* (2006.01)  *G01N 21/29* (2006.01)
*G01N 21/55* (2014.01)

(52) Gemeinsame Patentklassifikation (CPC):
**G01J 3/463; G01J 3/10; G01J 3/50; G01J 3/504; G01N 21/251; G01N 21/276; G01N 21/278; G01N 21/293**

(86) Internationale Anmeldenummer:
**PCT/EP2015/025084**

(87) Internationale Veröffentlichungsnummer:
**WO 2016/074801 (19.05.2016 Gazette 2016/20)**

(54) **KENNZAHL ZUR ERMITTLUNG EINER FARBQUALITÄT**

REFERENCE NUMBER FOR DETERMINING A COLOUR QUALITY

INDICE DE DÉTERMINATION D'UNE QUALITÉ DE COULEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.11.2014 EP 14003821**

(43) Veröffentlichungstag der Anmeldung:
**20.09.2017 Patentblatt 2017/38**

(73) Patentinhaber: **BASF Coatings GmbH**
**48165 Münster (DE)**

(72) Erfinder:
• **VIGNOLO, Carlos**
**97070 Würzburg (DE)**
• **CLOPPENBURG, Heinrich**
**48167 Münster (DE)**

(74) Vertreter: **BASF IP Association**
**BASF SE**
**GBI-C006**
**67056 Ludwigshafen (DE)**

(56) Entgegenhaltungen:
WO-A1-03/029811   WO-A1-2013/049796
CN-A- 103 344 338   DE-A1- 10 208 696
US-A- 5 740 078   US-A1- 2011 013 176

**Beschreibung**

Die vorliegende Erfindung betrifft ein Verfahren zum Ermitteln einer Kennzahl zur Charakterisierung einer Qualität einer Farbtoneinstellung eines Lacks. Ferner betrifft die vorliegende Erfindung ein Computerprogramm zur Durchführung des erfindungsgemäßen Verfahrens.

Beim Mischen eines Lacks, d. h. bei einer Farbtoneinstellung, werden verschiedene Farbtöne gemischt und anschließend mit einer Farbreferenz bzw. einer Farbtonvorlage verglichen. Dazu wird traditionellerweise der gemischte Lack spektralphotometrisch vermessen und dadurch ermittelte Messwerte, d. h. bspw. farbmetrische Koordinaten, mit entsprechenden Messwerten der Farbreferenz verglichen. Insbesondere bei Effektlacken, die eine Anzahl Effektpigmente umfassen, ist ein aussagefähiger Vergleich zwischen einem jeweiligen Effektlack und einer jeweiligen Farbreferenz nur unter Verwendung von Messwerten, die unter verschiedenen Messgeometrien ermittelt wer-den, möglich. Dies bedeutet, dass, um einen Lack mit einer Farbreferenz zu vergleichen, eine Vielzahl von Messwerten für eine Vielzahl von Messgeometrien ermittelt werden muss.

Im Stand der Technik sind Verfahren bekannt, die einen eingeschränkten Vergleich eines jeweiligen Lacks mit einer jeweiligen Farbtonvorlage, d. h. Farbreferenz, ohne Betrachtung ggf. vorhandener Effektpigmente für lediglich drei Messgeometrien vorsehen.

Die Druckschrift WO 2013/049796 A1 betrifft ein Verfahren zum Vergleichen eines Lacks mit einer Referenz, wobei als Referenz Farbcharakteristika einer Farbformel verwendet werden.

Die Druckschrift DE 102 08 696 A1 offenbart ein Verfahren, bei dem einer Metallicfarbe angenäherte Farben mittels Farbklassifikationscodes berechnet werden.

In der US-amerikanischen Druckschrift US 2011/013176 A1 wird ein Verfahren zum Ermitteln von Eigenschaften einer Oberfläche offenbart.

Die US-amerikanische Druckschrift US 5 740 078 betrifft ein Verfahren zum Entwickeln einer Farbrezeptur. Vor diesem Hintergrund wird ein Verfahren zum Ermitteln einer Kennzahl zur Charakterisierung einer Qualität einer Farbtoneinstellung eines Lacks in Bezug zu einer Farbreferenz vorgestellt, bei dem farbmetrische Koordinaten des Lacks und der Farbreferenz mit einem Spektralphotometer für eine Anzahl Messgeometrien ermittelt werden und bei dem jeweilige Farbdifferenzen aus den farbmetrischen Koordinaten des Lacks und der Farbreferenz für jede Messgeometrie der Anzahl Messgeometrien berechnet und normiert werden und wobei einer Gruppe von Kennwerten, die aus den jeweiligen normierten Farbdifferenzen berechnet werden, zum Ermitteln der Kennzahl mittels einer im Voraus bereitzustellenden Zuordnungsregel ein Wert einer Skala zugeordnet wird.

Eine Anzahl Messgeometrien umfasst mindestens eine Messgeometrie. Unter einer Farbdifferenz bzw. einem Farbabstand ist im Kontext der vorliegenden Erfindung ein Unterschied zwischen zwei Farben in einem Farbraum, insbesondere einem L*a*b*-Farbraum oder einem L*C*h°-Farbraum zu verstehen. Unter einer Messgeometrie ist im Kontext des vorgestellten Verfahrens eine Messanordnung mit einem in einem bestimmten Winkel zu einer mit einem jeweiligen Lack behandelten Oberfläche angeordneten Messinstrument, wie bspw. einem Spektralphotometer zu verstehen.

Unter farbmetrischen Koordinaten sind im Kontext der vorliegenden Erfindung Koordinaten in einem Farbraum zum Beschreiben einer Farbe oder Graustufe, insbesondere in einem L*a*b*-Farbraum oder einem L*C*h°-Farbraum zu verstehen.

Unter einer Gruppe von Kennwerten ist eine Anzahl von Kennwerten zu verstehen, die aus Farbdifferenzen zwischen Farbkoordinaten eines jeweiligen Lacks und einer jeweiligen Farbreferenz berechnet werden und die zur Zuordnung einer entsprechenden Kennzahl Q zu einem jeweiligen Vergleich von Lack und Referenzfarbe bzw. Farbreferenz verwendet werden. Selbstverständlich eignet sich die Kennzahl für einen Vergleich von Lack und Referenzfarbe sowohl für Unilacke als auch für Effektlacke. Dies bedeutet, dass mittels der erfindungsgemäß vorgesehenen Kennzahl Vergleiche von Effektlacken zu jeweiligen Farbreferenzen und/oder Vergleiche von Unilacken zu jeweiligen Farbreferenzen beurteilt werden können. Dabei kann die Gruppe von Kennwerten auch aus nur einem Kennwert bestehen, wie dies in der Regel bei Anwendung des erfindungsgemäßen Verfahrens für Unilacke vorgesehen ist.

Der L*C*h°-Farbraum entspricht dem L*a*b-Farbraum mit der Ausnahme, dass anstelle kartesischer Koordinaten a* und b*, Zylinderkoordinaten C* für Buntheit und h° für Bunttonwinkel verwendet werden. Eine Helligkeit (L*) bleibt dabei unverändert.

Um einen jeweiligen Lack mit einer Farbreferenz, wie bspw. einem weiteren Lack, zu vergleichen, ist vorgesehen, dass eine Kennzahl Q bestimmt bzw. berechnet wird, die einen Vergleich bzw. einen Qualitätswert einer Übereinstimmung des jeweiligen Lacks, d. h. bspw. eines Effektlacks oder eines Unilacks, mit der jeweiligen Farbreferenz in einer Skala, wie bspw. einer Schulnotenskala von 1 bis 8 ermöglicht bzw. angibt.

Zur Bestimmung der Kennzahl Q ist vorgesehen, dass jeweilige farbmetrische Koordinaten bzw. Farbkoordinaten, die bspw. in einem sogenannten L*a*b*-Farbraum angegeben werden, für sowohl den jeweiligen Lack als auch die jeweilige Farbreferenz unter verschiedenen Messgeometrien und/oder unter Verwendung verschiedener Lichtarten, bspw. unter Verwendung eines Spektralphotometers, ermittelt werden. Anhand der für den jeweiligen Lack bzw. die jeweilige Farbreferenz ermittelten Farbkoordinaten kann für jede Messgeometrie, d. h. für jeden Messwinkel und/oder für jede Lichtart eine entsprechende Farbdifferenz zwischen dem jeweiligen Lack und der jeweiligen Farbreferenz für achromatische Farben gemäß Formel (1) und für bunte Farben gemäß Formel (2) berechnet werden.

$$< dE_{Lab} >= \sqrt{< dL* >^2 + < da* >^2 + < db* >^2} \qquad (1)$$

$$< dE_{Lch} >= \sqrt{< dL* >^2 + < dC* >^2 + < dh^\circ >^2} \qquad (2)$$

Eine Unterscheidung zwischen bunten und unbunten Farben kann bspw. gemäß DIN 6175-2 bestimmt werden. Ferner ist vorgesehen, dass in den Formeln (1) und (2) die jeweiligen gemessenen Farbkoordinaten normiert werden. Um die jeweiligen gemessenen Farbkoordinaten zu normieren, kann bspw. Formel (3) verwendet werden.

$$< dX* >= \frac{dX*}{S_x} \qquad (3)$$

In Formel (3) wird ein normierter Wert $<dX*>$ durch eine Division eines jeweiligen Werts $dX*$, d. h. eines Werts einer jeweiligen Variablen einer Farbdifferenz, durch eine jeweilige winkelspezifische Toleranz $S_x$ berechnet, wobei die winkelspezifische Toleranz bzw. Akzeptanzgrenze $S_x$ gemäß Gleichung (4) zu berechnen ist.
Dabei kann eine Normierung bspw. gemäß Gleichungssystem (4) erfolgen.

$$S_L = S_a = S_b = 1/3$$
$$S_C = (1 + 0{,}048 \cdot C_R*)/3 \qquad (4)$$
$$S_h = (1 + 0{,}014 \cdot C_R*)/3$$

wobei $C_R*$ die Buntheit, d. h. Chroma bzw. Sättigung einer Farbreferenz R im L*a*b*-Farbraum bezeichnet und mittels der Gleichung $C_R* = \sqrt{(a_R*)^2 + (b_R*)^2}$ zu berechnen ist, wobei der Index "R" auf die Farbreferenz R hinweist.

Die bestimmten Farbdifferenzen bzw. die normierten bestimmten Farbdifferenzen zwischen dem jeweiligen Lack und der jeweiligen Farbreferenz für die verschiedenen Messgeometrien und/oder die verschiedenen Lichtarten bilden zusammen bspw. eine Gruppe von Kennwerten. Zusätzlich kann auch eine Summe über die Farbdifferenzen oder über eine Auswahl der Farbdifferenzen für die verschiedenen Messgeometrien und/oder die verschiedenen Lichtarten einen zu der Gruppe von Kennwerten gehörenden Kennwert darstellen. Ferner kann als Kennwert bspw. auch ein maximaler Wert unter den normierten bestimmten Farbdifferenzen zwischen einem jeweiligen Lack und einer entsprechenden Farbreferenz für bspw. eine Messgeometrie und zwei verschiedene Lichtarten bereitgestellt werden.

Um jeweilige Effekteigenschaften eines Effektlacks bei dem erfindungsgemäßen Verfahren zu berücksichtigen, ist vorgesehen, dass Glitzerabstände, d. h. Sparkle-Differenzen, und Grobheitsabweichungen, d. h. Graininess-Differenzen, gemessen mit einem Gonio-Effektspektralphotometer berücksichtigt werden. Dazu werden jeweilige mit dem Gonio-Effektspektralphotometer gemessene Werte der Glitzerabstände bzw. der Grobheitsabweichungen bspw. gemäß Formel (3) normiert und bei einer Zuordnung jeweiliger berechneter Farbdifferenzen zu einem Skalenwert der Kennzahl Q, d. h. in einer jeweiligen Zuordnungsregel, die im Voraus bereitzustellen ist, berücksichtigt.

Zur Zuordnung jeweiliger Farbdifferenzen und/oder Glitzerabstände und/oder Grobheitsabweichungen, gemessen unter verschiedenen Messgeometrien, zu einem jeweiligen Skalenwert der Kennzahl Q ist vorgesehen, dass für einen Effektlack für jeweilige Farbgeometrien berechnete und normierte Farbdifferenzen durch bspw. eine Summenbildung miteinander verrechnet werden und das Ergebnis einer derartigen Verrechnung ggf. unter Verwendung weiterer Bedingungen anhand einer Zuordnungsregel, die bspw. Intervalle zwischen jeweiligen Skalenwerten regelt, einem diskreten Skalenwert der Kennzahl Q zugeordnet wird.

Bei einer jeweiligen Zuordnungsregel können neben jeweiligen miteinander verrechneten Farbdifferenzen jeweiliger Messgeometrien bei einer Beurteilung von Effektlacken weitere Bedingungen, wie bspw. eine Mindest- bzw. Höchstdifferenz von Farbdifferenzen, Glitzerabständen und/oder Grobheitsabweichungen konkreter Messgeometrien verwendet werden.

Weiterhin ist vorgesehen, dass, für den Fall, dass ein sogenannter Unilack mit einer entsprechenden Farbreferenz verglichen werden soll, Farbdifferenzen lediglich einer Messgeometrie, die unter mindestens zwei verschiedenen Lichtarten ermittelt wurden, miteinander durch bspw. Bildung eines Mittelwerts der ermittelten Farbdifferenzen oder Ermittlung des maximalen Werts unter den ermittelten Farbdifferenzen verrechnet werden. Eine Unterscheidung zwischen Uni- und Effektlacken kann bspw. gemäß DIN 6175-1 bestimmt werden. Anhand der verrechneten Farbdifferenzen kann ein jeweiliger Unilack einem jeweiligen Skalenwert der Kennzahl Q gemäß einer entsprechenden Zuordnungsregel zugeordnet werden, so dass die erfindungsgemäße Kennzahl Q entsteht. Ferner betrifft die vorliegende Erfindung ein Computerprogramm mit Programmcodemitteln, um alle Schritte des erfindungsgemäßen Verfahrens durchzuführen, wenn das Computerprogramm auf einem Computer oder einer entsprechenden Recheneinheit ausgeführt wird.

Das erfindungsgemäße Computerprogramm dient insbesondere zur Ausführung des erfindungsgemäßen Verfahrens auf einem Computer oder einer Recheneinheit in Kombination mit einem Spektralphotometer.

Eine mögliche Ausgestaltung des erfindungsgemäßen Computerprograms könnte bspw. folgende Schritte:

1. Ermitteln aller Farbkoordinaten für alle verfügbaren Messgeometrien eines Lacks und einer Farbreferenz in einem Farbraum.

2. Berechnen jeweiliger Farbdifferenzen zwischen dem Lack und der Farbreferenz für alle Messgeometrien.

3. Falls der zu vergleichende Lack ein Effektlack ist, Berechnen jeweiliger Glitzerabstände und/oder Grobheitsabweichungen für jede Messgeometrie.

4. Falls der zu vergleichende Lack ein Unilack ist, Berechnen jeweiliger Farbdifferenzen für mindestens zwei Lichtarten.

5. Normieren der in Schritt 2 bzw. 4 berechneten Farbdifferenzen sowie der ggf. in Schritt 3 berechneten Glitzerabstände und/oder Grobheitsabweichungen.

6. Im Falle eines Effektlacks, Aufsummieren der jeweiligen normierten Farbdifferenzen.

7. Im Falle eines Unilacks, Bestimmen des maximalen Werts unter den bestimmten Farbdifferenzen aus Schritt 4.

8. Je nach Lacktyp, Effektlack oder Unilack, Zuweisen der in den Schritten 2 und 6 bestimmten Kennwerten oder des in Schritt 7 bestimmten Kennwerts zu einem jeweiligen Skalenwert der Kennzahl Q gemäß einer Zuordnungsregel.

Erfindungsgemäß wird demnach eine konkrete Kennzahl Q zur Bestimmung der Farbqualität eines Lacks durch exakt definierte Regeln bereitgestellt. Die Qualitätsstufen werden, wie nachfolgend im Zusammenhang mit den Figuren dargelegt, durch eindeutige Gleichungen definiert. Dadurch ergibt sich automatisch die Zuordnungsregel mit festgelegten Gewichtungsfaktoren je nach Farbtontyp (Uni- bzw. Effektlack). Nur wenn alle Kriterien, d. h. Gleichungen einer Qualitätsstufe, entsprechend jeweils einer konkreten Kennzahl Q, erfüllt sind, wird dem jeweiligen Lack dieser konkrete Skalenwert für die Kennzahl Q zugeordnet. Werden nicht alle Kriterien einer Qualitätsstufe erfüllt, erfolgt eine Zuordnung zu der nächsttieferen Qualitätsstufe. Sind auch hier nicht alle Qualitätskriterien erfüllt, erfolgt eine Zuordnung zu der wiederum nächsttieferen Qualitätsstufe, usw. Sind in der zweitniedrigsten Qualitätsstufe nicht alle Qualitätskriterien erfüllt, erfolgt eine Zuordnung zu der niedrigsten Qualitätsstufe. Eine Zuordnung zu der niedrigsten Qualitätsstufe erfolgt immer dann, wenn für keine höhere Qualitätsstufe die jeweiligen Qualitätskriterien erfüllt sind.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

Kurzbeschreibung der Zeichnungen

Figur 1 zeigt eine Zuordnungstabelle mit Zuordnungsregeln für eine Zuordnung jeweiliger Farbdifferenzen zu einem jeweiligen Skalenwert der Kennzahl Q gemäß einer möglichen Ausgestaltung des vorgestellten Verfahrens.

Figur 2 zeigt Ausgestaltungen der erfindungsgemäß vorgesehenen Kennzahl Q im Verhältnis zu einem Mittelwert jeweiliger Farbdifferenzen zwischen fünf verschiedenen Lacken und einer Farbreferenz.

Figur 3 zeigt eine grafische Darstellung der Farbdifferenzen aus Figur 2.

Figur 4 zeigt Ausgestaltungen der erfindungsgemäß vorgesehenen Kennzahl Q für verschiedene Unilacke.

Figur 5 zeigt eine grafische Darstellung von Farbdifferenzen der verschiedenen Unilacke aus Figur 4.

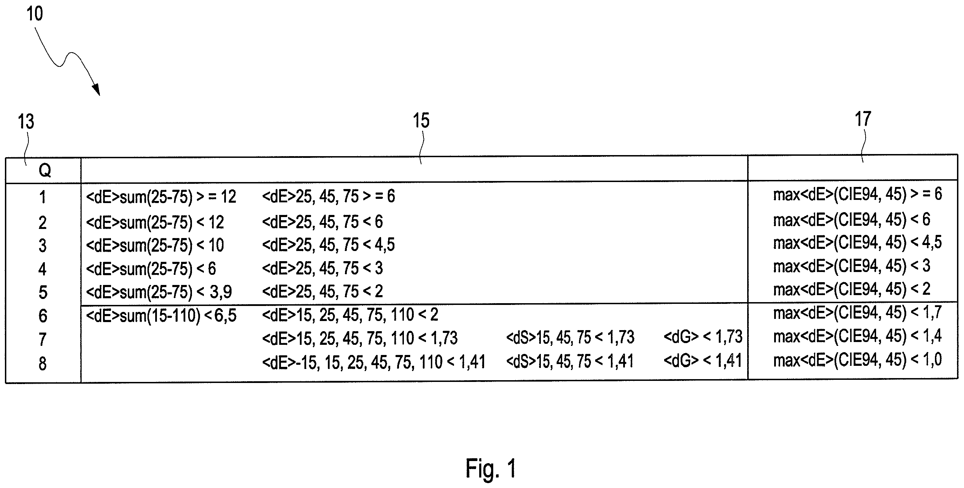

In Figur 1 ist eine Tabelle 10 mit drei Spalten 13, 15 und 17 dargestellt. Die erste Spalte 13 gibt Skalenwerte einer Kennzahl Q an, die sich über eine Notenskala von 1 bis 8 aufspannen, wobei 1 eine schlechteste Qualität, d. h. eine schlecht möglichste Übereinstimmung eines jeweiligen Lacks mit einer entsprechenden Farbreferenz angibt und 8 eine beste Qualität, d. h. eine beste mögliche Übereinstimmung eines jeweiligen Lacks mit einer entsprechenden Farbreferenz.

Spalte 15 gibt Zuordnungsregeln für berechnete Farbdifferenzen aus Spektralmessungen eines Effektlacks und einer entsprechenden Farbreferenz zu einem jeweiligen Skalenwert der Kennzahl Q in Form von konkreten eindeutigen Gleichungen an. Um eine Qualität einer Entsprechung eines Effektlacks zu einer jeweiligen Farbreferenz einer Kennzahl Q zuzuordnen, sind mindestens vier, höchstens zehn Bedingungen, die jeweils durch eine konkrete Gleichung definiert sind, zu erfüllen. Dabei soll der Begriff "Gleichung" weit ausgelegt werden, nämlich sowohl "Gleichung" im engeren Sinn als Aussage über die Gleichheit zweier Terme als auch "Ungleichung" im engeren Sinn als Größenvergleich zwischen zwei Termen umfassen.

In Zeile 1 von Spalte 15 ist bspw. festgelegt, dass, wenn eine Summe aller berechneten Farbdifferenzen für

$$\sum_{25}^{75} <dE>$$

Messgeometrien zwischen 25° und 75°, d. h. $\sum_{25}^{75} <dE>$ größer oder gleich einem Wert von 12 und jede der Messgeometrien 25°, 45° und 75° bei Alleinbetrachtung größer oder gleich einem Wert von 6 ist, der jeweilige Lack der Kennzahl Q mit dem Skalenwert 1 zugeordnet wird. Da die Kennzahl Q mit dem Skalenwert 1 hier die niedrigste Qualitätsstufe darstellt, erfolgt auch eine Zuordnung zur Kennzahl Q = 1, wenn bspw. die Summe aller gemessenen Farbdifferenzen für Messgeometrien zwischen 25° und 75°,

$$\sum_{25}^{75} <dE>$$

d. h. $\sum_{25}^{75} <dE>$ größer oder gleich 12 ist, aber bspw. die Farbdifferenz für eine Messgeometrie der Messgeometrien 25°, 45° und 75° bei Alleinbetrachung kleiner 6 ist.

Die Summe $\sum_{25}^{75} <dE>$ entspricht dabei in der Regel einer Aufsummierung der Farbdifferenzen für die einzelnen Messgeometrien 25°, 45° und 75°. Entsprechend entspricht $\sum_{15}^{110} <dE>$ einer Aufsummierung der Farbdifferenzen für die einzelnen Messgeometrien 15°, 25°, 45°, 75° und 110°.

Bei allen höheren Qualitätsstufen, d. h. Q = 2, 3, 4, 5, 6, 7, und 8 müssen jeweils alle Qualitätskriterien bzw. Gleichungen, die den jeweiligen Qualitätsstufen zugeordnet sind, von den ermittelten Farbdifferenzen erfüllt sein, damit ein entsprechender Lack der jeweiligen Qualitätsstufe bzw. der entsprechenden Kennzahl Q = 2, 3, 4, 5, 6, 7 oder 8 zugeordnet wird.

Da bei Effektlacken auch Glitzerabstände und Grobheitsabweichungen berücksichtigt werden sollen, ist vorgesehen, dass insbesondere bei hohen Kennzahlen, die einer hohen Qualität einer Übereinstimmung zwischen einem jeweiligen Effektlack und einer entsprechenden Farbreferenz entsprechen, verschärfte, d. h. zusätzliche Bedingungen gelten. Dies bedeutet, dass, um bspw. jeweiligen Kriterien für eine Zuordnung zur Kennzahl Q mit einem Wert von 7 zu erfüllen, für einen jeweiligen Effektlack keine anhand von Messgeometrien zwischen 15° und 110° zu einer entsprechenden Farbreferenz jeweilig berechnete Farbdifferenz dE einen Wert größer oder gleich 1,73 aufweisen darf. Entsprechend muss jede der zu den Messgeometrien 15°, 25°, 45°, 75° und 110° berechnete Farbdifferenz dE kleiner 1,73 sein. Zusätzlich darf ein Glitzerabstand dS zwischen dem jeweiligen Effektlack und der entsprechenden Farbreferenz für keine der Messgeometrien 15°, 45° und 75° größer oder gleich einem Wert von 1,73 sein. Weiterhin darf eine Grobheitsabweichung dG zwischen dem jeweiligen Effektlack und der entsprechenden Farbreferenz nicht größer oder gleich einem Wert von 1,73 sein.

Da Unilacke häufig einen Metamerieeffekt, d. h. eine unterschiedliche Farbe bzw. Graustufe bei Beleuchtung mit unterschiedlichen Lichtarten zeigen, sind für Unilacke eigene Zuordnungsregeln vorgesehen, wie in Spalte 17 dar-

gestelt.

Zur Zuordnung eines jeweiligen Unilacks zu einem jeweiligen Skalenwert der Kennzahl Q wird ein maximaler Wert einer Farbdifferenz bzw. eines Graustufenunterschieds zwischen einem jeweiligen Unilack und einer entsprechenden Farbreferenz, die jeweils unter verschiedenen Lichtarten, bspw. unter der Lichtart D64 und der Lichtart TL84, für jeweils eine Messgeometrie von bspw. 45° vermessen wurden, anhand einer Farbabstandsformel CIE94, die auf einem L*C*h°-Farbraum basiert, berechnet. Dies bedeutet, dass dem Unilack bspw. eine Kennzahl Q mit einem Skalenwert von 1 zugeordnet wird, wenn der jeweilige Unilack einen maximalen Wert unter den ermittelten Farbdifferenzen zwischen dem jeweiligen Unilack und der entsprechenden Farbreferenz, basierend auf Spektralmessungen unter den Lichtarten D64 und TL84, von größer oder gleich einem Wert von 6 aufweist.

Für eine Zuordnung zu anderen Werten der Kennzahl Q sind entsprechende Kriterien in Spalten 15 (für Effektlacke) und 17 (für Unilacke) der Tabelle 10 definiert.

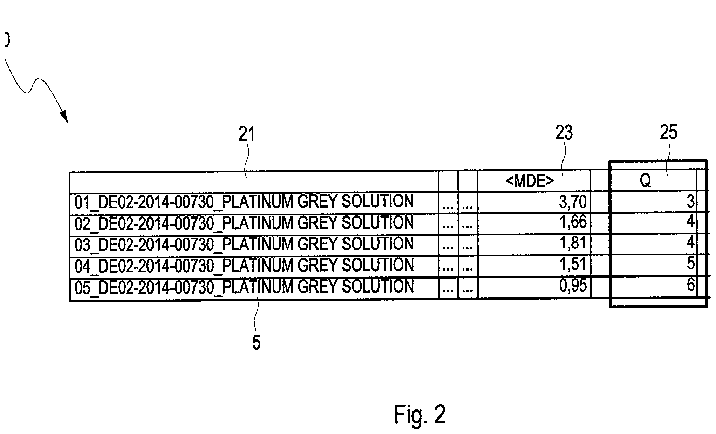

In Figur 2 ist eine Tabelle 20 dargestellt, die in einer ersten Spalte 21 verschiedene Effektlacke und in Spalte 23 eine zu einer Farbreferenz über verschiedene Messgeometrien 15°, 25°, 45°, 75° und 110° berechnete mittlere Farbdifferenz sowie in Spalte 25 einen entsprechenden Skalenwert der Kennzahl Q angibt. Die Kennzahl Q ist insbesondere ordinalskaliert, so dass jeweilige Skalenwerte der Kennzahl Q stets ganzzahlig vorliegen.

Alle in Spalte 21 aufgeführten Lacke wurden mit einer einzelnen Farbreferenz verglichen, um den Lack mit der besten Übereinstimmung zu der einen Farbreferenz zu identifizieren.

Während zur Überprüfung gemäß dem Stand der Technik lediglich die bei verschiedenen Messgeometrien ermittelten Farbdifferenzen ggf. einzeln für verschiedene Lichtarten verglichen werden können, kann anhand der Kennzahl Q, wie sie in Spalte 25 dargestellt ist, eine qualitative Übereinstimmung eines jeweiligen Lacks aus Spalte 21 zu der Farbreferenz unter gleichzeitiger Berücksichtigung mehrerer Qualitätkriterien, wie bspw. einer Mehrzahl unter verschiedenen Lichtarten und/oder verschiedenen Messgeometrien ermittelter Farbdifferenzen, beurteilt werden.

Da der Lack "05", d. h. der Lack aus der fünften Zeile der Tabelle 20, einen höchsten Skalenwert für Q zeigt, nämlich 6, stimmt der Lack 5 von allen in Tabelle 20 dargestellten Lacken am besten mit der Farbreferenz überein.

In Spalte 23 sind mittlere Farbdifferenzen, die über ein arithmetisches Mittel berechnet wurden, dargestellt. In diesem Zusammenhang ist zu betonen, dass keine der in Spalte 23 angegeben mittleren Farbdifferenzen eine abschließende Beurteilung über eine Qualität einer Übereinstimmung zwischen einem jeweiligen Lack und der Farbreferenz ermöglicht. Während traditionelle Maßzahlen, wie bspw. eine mittlere Farbdifferenz lediglich einen Vergleich anhand einer Bedingung, d. h. einer Lage im Farbraum, ermöglicht, können über die Kennzahl Q mehrere Kriterien, wie bspw. Farbabstand im Farbraum, Glitzerabstand und ein Verhalten unter verschiedenen Lichtarten, gemeinsam beurteilt und quantifiziert werden.

Eine Erhöhung jeweiliger Skalenwerte der Kennzahl Q, wie sie in Spalte 25 dargestellt sind, die aufgrund von Messwerten unter verschiedenen Lichtarten ermittelt wurde, kann mit einer Reduktion entsprechender mittlerer Farbdifferenzen MDE, wie sie in Spalte 23 dargestellt sind, einhergehen. Entsprechend verhalten sich die Werte in den Spalten 23 und 25 in der Regel zueinander umgekehrt proportional.

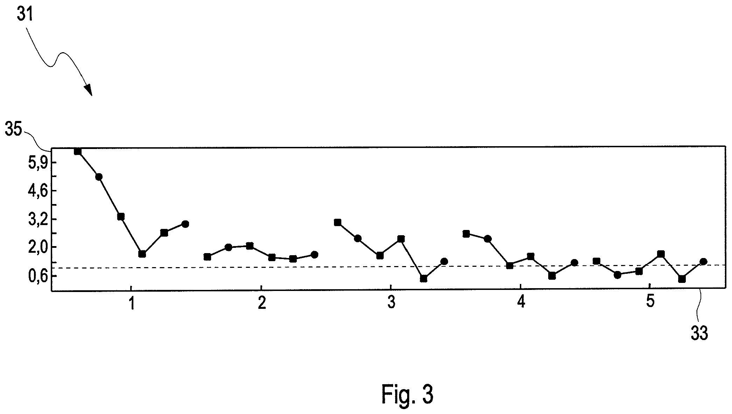

In Figur 3 ist ein Versuchsablauf zum Auffinden eines der Farbreferenz bestmöglich entsprechenden Lacks aus Figur 2 auf Grundlage eines Vergleichs von Farbdifferenzen dargestellt.

Ein Diagramm 31, das sich über eine Abszisse 33, die einen jeweiligen Lack 1 bis 5 angibt, und eine Ordinate 35, die für jeweilige Messgeometrien 15°, 25°, 45°, 75° und 110° zwischen dem jeweiligen Lack und der Farbdifferenz berechnete Farbdifferenzen dE angibt, aufspannt, stellt die in Figur 2 beschriebenen Lacke bzw. deren jeweilige Farbdifferenzen zu einer entsprechenden Farbreferenz grafisch dar.

Um die fünf verschiedenen Lacke aus Figur 2 miteinander zu vergleichen und denjenigen Lack zu identifizieren, der am besten mit der Farbreferenz übereinstimmt, müssen traditionellerweise die in dem Diagramm 31 eingetragenen Farbdifferenzen der jeweiligen Lacke 1 bis 5 für jede der Messgeometrien 15°, 25°, 45°, 75° und 110° händisch durch einen Fachmann verglichen werden. Insbesondere zwischen den Lacken Nr. 2 und Nr. 5 kann dabei nur schwer differenziert werden, da beide Lacke vergleichbare Farbdifferenzen zeigen und für verschiedene Messgeometrien gegenüber dem jeweils anderen Lack sowohl besser als auch schlechter mit der Farbreferenz übereinstimmen. Es ist daher nahezu unmöglich, eine objektive Grundlage für eine Auswahl zwischen Lack Nr. 2 oder Lack Nr. 5 zu finden, wohingegen die Kennzahl Q, wie in Figur 2 dargestellt, zweifelsfrei den Lack Nr. 5 als am besten mit der Farbreferenz übereinstimmenden Lack identifiziert und den Lack Nr. 2 noch schlechter bewertet als Lack Nr. 4.

Durch die erfindungsgemäße Kennzahl Q kann entsprechend schnell und ohne Fachwissen ein jeweiliger am besten zu einer Farbreferenz passender Lack durch einen Vergleich lediglich einer jeweiligen Kennzahl Q pro Lack identifiziert werden.

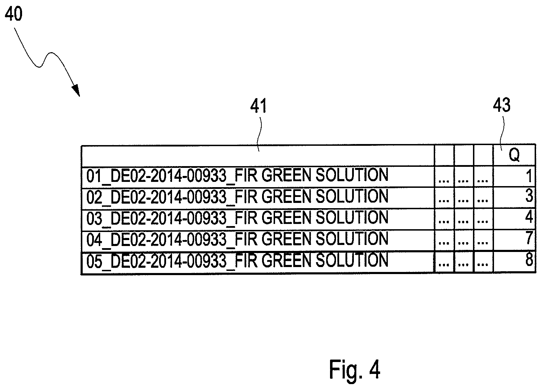

In Figur 4 ist eine Tabelle 40 dargestellt, die analog zu Figur 2 in Spalte 41 fünf verschiedene Lacke beschreibt und in Spalte 43 entsprechende Kennzahlen Q darstellt. Da die in Tabelle 40 beschriebenen Lacke Unilacke sind, die bei lediglich einer Messgeometrie von 45° vermessen werden, wurde keine gemittelte Farbdifferenz berechnet. Dies bedeutet, dass für jeden Lack nur eine Farbdifferenz pro Lichtart, hier der Lichtart D65, zur Beurteilung zur Verfügung steht.

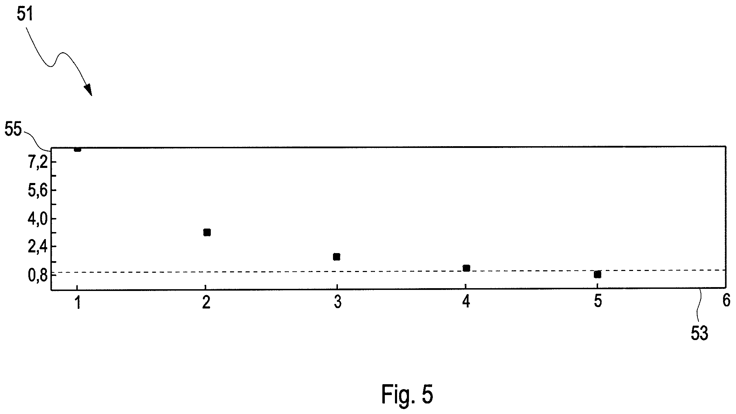

Figur 5 zeigt ein der Tabelle 40 in Figur 4 entsprechendes Diagramm 51, das sich über eine Abszisse 53, die einen jeweiligen Lack 1 bis 5 angibt, und eine Ordinate 55, die zwischen jeweiligem Lack und einer Farbreferenz berechnete Farbdifferenzen dE angibt, aufspannt. Um die verschiedenen Unilacke auch hinsichtlich eines Metamerieeffekts zu vergleichen, sind verschiedene Messungen unter verschiedenen Lichtarten notwendig, die jeweils über ein eigenes Diagramm bzw. über verschiedene Farbdifferenzen beurteilt werden müssen, um einen am besten zu der jeweiligen Farbreferenz übereinstimmenden Lack zu identifizieren.

Da die erfindungsgemäße Kennzahl Q verschiedene Messwerte, die unter bspw. verschiedenen Lichtarten ermittelt wurden, in sich vereint, kann anhand lediglich einer einzelnen Kennzahl Q pro Lack ein Unilack auch hinsichtlich eines Metamerieeffekts schnell und einfach mit einer jeweiligen Farbreferenz verglichen werden.

## Patentansprüche

1. Verfahren zum Ermitteln einer Kennzahl zur Charakterisierung einer Qualität einer Farbtoneinstellung eines Unilacks in Bezug zu einer Farbreferenz, wobei farbmetrische Koordinaten des Unilacks und der Farbreferenz mit einem Spektralphotometer für eine Anzahl Messgeometrien und unter Verwendung mindestens zweier Lichtarten ermittelt werden und bei dem jeweilige Farbdifferenzen aus den farbmetrischen Koordinaten des Unilacks und der Farbreferenz für jede Messgeometrie der Anzahl Messgeometrien und jede verwendete Lichtart berechnet und normiert werden und wobei einer Anzahl von Kennwerten, die aus den jeweiligen normierten Farbdifferenzen berechnet werden, zum Ermitteln der Kennzahl mittels einer im Voraus bereitzustellenden Zuordnungsregel ein Wert einer Skala zugeordnet wird, **dadurch gekennzeichnet, dass** jeweilige Farbdifferenzen aus den farbmetrischen Koordinaten des Unilacks und der Farbreferenz gemäß der Formel

$$< dE_{Lch} > = \sqrt{< dL^* >^2 + < dC^* >^2 + < dh^\circ >^2}$$ für jede Messgeometrie der Anzahl Messgeometrien und jede verwendete Lichtart berechnet und normiert werden, wobei die Farbdifferenzen gemäß der Formel

$$< dX^* > = \frac{dX^*}{S_x}$$ normiert werden, wobei X je einer der drei Koordinaten L, C und h entspricht, und wobei bei der Normierung der Farbdifferenzen folgender mathematische Zusammenhang gilt: $S_L = S_a = S_b = 1/3$, $S_c = (1 + 0{,}048 \cdot C_R^*)/3$ und $S_h = (1 + 0{,}014 \cdot C_R^*)/3$, wobei R der Farbreferenz entspricht und $C_R^*$ ein Chroma der Farbreferenz im L*a*b*-Farbraum beschreibt, wobei gilt: $C_R^* = \sqrt{(a_R^*)^2 + (b_R^*)^2}$ , und wobei die Zuordnungsregel Regeln umfasst, die angeben, dass ein Kennwert als maximaler Wert von Farbdifferenzen und/oder Graustufenunterschieden zwischen dem Unilack und einer entsprechenden Farbreferenz, die jeweils unter verschiedenen Lichtarten, für jeweils eine Messgeometrie vermessen wurden, dann einem Skalenwert 1 zugeordnet wird, wenn der Kennwert größer oder gleich 6 ist, und wobei der Kennwert dann einem Skalenwert 2 zugeordnet wird, wenn der Kennwert kleiner 6 ist, und wobei der Kennwert dann einem Skalenwert 3 zugeordnet wird, wenn der Kennwert kleiner 4,5 ist, und wobei der Kennwert dann einem Skalenwert 4 zugeordnet wird, wenn der Kennwert kleiner 3 ist, und wobei der Kennwert dann einem Skalenwert 5 zugeordnet wird, wenn der Kennwert kleiner 2 ist, und wobei der Kennwert dann einem Skalenwert 6 zugeordnet wird, wenn der Kennwert kleiner 1,7 ist, und wobei der Kennwert dann einem Skalenwert 7 zugeordnet wird, wenn der Kennwert kleiner 1,4 ist, und wobei der Kennwert dann einem Skalenwert 8 zugeordnet wird, wenn der Kennwert kleiner 1,0 ist, und wobei immer dann eine Zuordnung zu einem Skalenwert 1 erfolgt, wenn für keinen höheren Skalenwert jeweilige Zuordnungsregeln erfüllt sind.

2. Verfahren zum Ermitteln einer Kennzahl zur Charakterisierung einer Qualität einer Farbtoneinstellung eines Effektlacks in Bezug zu einer Farbreferenz, wobei farbmetrische Koordinaten des Effektlacks und der Farbreferenz mit einem Spektralphotometer für eine Anzahl Messgeometrien und unter Verwendung mindestens einer Lichtart ermittelt werden und bei dem jeweilige Farbdifferenzen aus den farbmetrischen Koordinaten des Effektlacks und der Farbreferenz für jede Messgeometrie der Anzahl Messgeometrien und jede verwendete Lichtart berechnet und normiert werden und wobei einer Anzahl von Kennwerten, die aus den jeweiligen normierten Farbdifferenzen berechnet werden, zum Ermitteln der Kennzahl mittels einer im Voraus bereitzustellenden Zuordnungsregel ein Wert einer Skala zugeordnet wird, und wobei jeweilige Glitzerabstände und/oder Grobheitsabweichungen zwischen dem Lack und der Farbreferenz, gemessen mit einem Gonioeffektspektralphotometer, normiert und bei der Berechnung der Kennzahl verwendet werden, **dadurch gekennzeichnet, dass** jeweilige Farbdifferenzen aus den farbmetrischen Koordinaten des Effektlacks und der Farbreferenz gemäß der Formel

$$< dE_{Lch} >= \sqrt{< dL^* >^2 + < dC^* >^2 + < dh^\circ >^2}$$ für jede Messgeometrie der Anzahl Messgeometrien und jede verwendete Lichtart berechnet und normiert werden, wobei die Farbdifferenzen gemäß der Formel

$$< dX^* >= \frac{dX^*}{S_x}$$ normiert werden, wobei X je einer der Koordinaten L, C, und h entspricht, und wobei bei der Normierung der Farbdifferenzen folgender mathematische Zusammenhang gilt: $S_L = S_a = S_b = 1/3$, $S_c = (1 + 0,048 \cdot C_R^*)/3$ und $S_h = (1 + 0,014 \cdot C_R^*)/3$, wobei R der Farbreferenz entspricht und $C_R^*$ ein Chroma der Farbreferenz im L*a*b*-Farbraum beschreibt, wobei gilt: $C_R^* = \sqrt{(a_R^*)^2 + (b_R^*)^2}$ , und wobei die Zuordnungsregel Regeln umfasst, die angeben, dass eine Zuordnung zu einem Skalenwert 1 dann erfolgt, wenn ein erster Kennwert, der durch eine Summe aller Farbdifferenzen zwischen dem Effektlack und einer Effektlack- bzw. Farbreferenz für die Messgeometrien 25°, 45° und 75° gebildet wird, größer oder gleich 12 und jeweilige Farbdifferenzen zwischen dem Effektlack und der Farbreferenz, die für die einzelnen Messgeometrien 25°, 45° und 75° ermittelt wurden, bei jeweiliger Alleinbetrachtung größer oder gleich 6 sind, und wobei eine Zuordnung zu einem Skalenwert 2 dann erfolgt, wenn der erste Kennwert kleiner 12 ist und jede der Farbdifferenzen, die für die Messgeometrien 25°, 45° und 75° ermittelt wurden, kleiner 6 ist, und wobei eine Zuordnung zu einem Skalenwert 3 dann erfolgt, wenn der erste Kennwert kleiner 10 ist und jede der Farbdifferenzen, die für die Messgeometrien 25°, 45° und 75° ermittelt wurden, kleiner 4,5 ist, und wobei eine Zuordnung zu einem Skalenwert 4 dann erfolgt, wenn der erste Kennwert kleiner 6 ist und jede der Farbdifferenzen, die für die Messgeometrien 25°, 45° und 75° ermittelt wurden, kleiner 3 ist, und wobei eine Zuordnung zu einem Skalenwert 5 dann erfolgt, wenn der erste Kennwert kleiner 3,9 ist und jede der Farbdifferenzen, die für die Messgeometrien 25°, 45° und 75° ermittelt wurden, kleiner 2 ist, und wobei eine Zuordnung zu einem Skalenwert 6 dann erfolgt, wenn ein zweiter Kennwert, der durch eine Summe aller Farbdifferenzen zwischen dem Effektlack und der Farbreferenz für die Messgeometrien 15°, 25°, 45°, 75° und 110° gebildet wird, kleiner 6,5 ist und jede der Farbdifferenzen, die für die Messgeometrien 15°, 25°, 45°, 75° und 110° ermittelt wurden, kleiner 2 ist, und wobei eine Zuordnung zu einem Skalenwert 7 dann erfolgt, wenn der zweite Kennwert kleiner 6,5 ist, jede der Farbdifferenzen, die für die Messgeometrien 15°, 25°, 45°, 75° und 110° ermittelt wurden, kleiner 1,73 ist und jeder Glitzerabstand zwischen dem Effektlack und der Farbreferenz, der für die Messgeometrien 15°, 45° und 75° ermittelt wurde, kleiner 1,73 ist und eine Grobheitsabweichung zwischen dem Effektlack und der Farbreferenz kleiner 1,73 ist, und wobei eine Zuordnung zu einem Skalenwert 8 erfolgt, wenn der zweite Kennwert kleiner 6,5 ist und jede der Farbdifferenzen, die für die Messgeometrien -15°, 15°, 25°, 45°, 75°, 110° gebildet wurden, kleiner 1,41 ist und jeder Glitzerabstand zwischen dem Effektlack und der Farbreferenz, der für die Messgeometrien 15°, 45° und 75° ermittelt wurde, kleiner 1,41 ist und die Grobheitsabweichung zwischen dem Effektlack und der Farbreferenz kleiner 1,41 ist, wobei die Zuordnungsregel für entsprechende Glitzerabstände und/oder Grobheitsabweichungen zwischen Effektlack und Farbreferenz erweitert ist, und wobei jeweilige Glitzerabstände und Grobheitsabweichungen durch die winkelspezifische Toleranz $S_x$ geteilt und dadurch normiert werden und wobei immer dann eine Zuordnung zu einem Skalenwert 1 erfolgt, wenn für keinen höheren Skalenwert jeweilige Zuordnungsregeln erfüllt sind.

3. Verfahren nach Anspruch 1 oder 2, **dadurch gekennzeichnet, dass** die Farbdifferenzen für achromatische und/oder chromatische farbmetrische Koordinaten mit jeweiligen Farbabstandsformeln berechnet werden.

4. Computerprogramm mit Programmcodemitteln, um alle Schritte eines Verfahrens nach einem der Ansprüche 1 bis 3 durchzuführen, wenn das Computerprogramm auf einem Computer oder einer entsprechenden Recheneinheit in Kombination mit einem Spektralphotometer ausgeführt wird.

5. Computerprogramm nach Anspruch 4, das auf einem computerlesbaren Datenträger gespeichert ist.

6. Verwendung eines Verfahrens nach einem der Ansprüche 1 bis 3 zum Ermitteln der Farbtonnachstellungsqualität eines Fahrzeuglacks anhand einer auf einem Fahrzeug aufgebrachten Farbreferenz.

**Claims**

1. Method for determining a characteristic number for characterizing a quality of a shade setting of a solid-colour paint in relation to a colour reference, where colorimetric coordinates of the solid-colour paint and of the colour reference are determined with a spectrophotometer for a number of measurement geometries and using at least two illuminates and wherein respective colour differences are calculated and standardized from the colorimetric coordinates of the solid-colour paint and of the colour reference for each measurement geometry of the number of measurement geometries and each illuminate used, and where a number of characteristic values calculated from the respective standardized colour differences is assigned a scale value for determining the characteristic number by means of an assignment rule to be provided in advance, **characterized in that** respective colour differences are calculated and standardized from the colorimetric coordinates of the solid-colour paint and of the colour reference in accordance with the formula

$$<dE_{Lch}> = \sqrt{<dL^*>^2 + <dC^*>^2 + <dh^\circ>^2}$$

for each measurement geometry of the number of measurement geometries and each illuminate used, where the colour differences are standardized in accordance with the formula $<dX^*> = \dfrac{dX^*}{S_x}$ , where X corresponds each to one of the three coordinates L, C and h, and where the standardization of the colour differences is subject to the following mathematical relation: $S_L = S_a = S_b = 1/3$, $Sc = (1 + 0.048\, C_R^*)/3$ and $S_h = (1 + 0.014 \cdot C_R^*)/3$, where R corresponds to the colour reference and $C_R^*$ describes a chroma of the colour reference in the L*a*b* colour space, where: $C_R^* = \sqrt{(a_R^*)^2 + (b_R^*)^2}$ , and where the assignment rule comprises rules which specify that a characteristic value, as maximum value of colour differences and/or grey-stage differences between the solid-colour paint and a corresponding colour reference, each measured under different illuminates, for a particular measurement geometry, is assigned to a scale value 1 when the characteristic value is greater than or equal to 6, and where the characteristic value is assigned to a scale value 2 when the characteristic value is less than 6, and where the characteristic value is assigned to a scale value 3 when the characteristic value is less than 4.5, and where the characteristic value is assigned to a scale value 4 when the characteristic value is less than 3, and where the characteristic value is assigned to a scale value 5 when the characteristic value is less than 2, and where the characteristic value is assigned to a scale value 6 when the characteristic value is less than 1.7, and where the characteristic value is assigned to a scale value 7 when the characteristic value is less than 1.4, and where the characteristic value is assigned to a scale value 8 when the characteristic value is less than 1.0, and where assignment to a scale value 1 takes place whenever respective assignment rules are not met for any higher scale value.

2. Method for determining a characteristic number for characterizing a quality of a shade setting of an effect paint in relation to a colour reference, where colorimetric coordinates of the effect paint and of the colour reference are determined with a spectrophotometer for a number of measurement geometries and using at least one illuminate and wherein respective colour differences are calculated and standardized from the colorimetric coordinates of the effect paint and of the colour reference for each measurement geometry of the number of measurement geometries and each illuminate used, and where a number of characteristic values calculated from the respective standardized colour differences is assigned a scale value for determining the characteristic number by means of an assignment rule to be provided in advance, and where respective sparkle differences and/or graininess differences between the paint and the colour reference, measured with a goniospectrophotometer, are standardized and used in the calculation of the characteristic number, **characterized in that** respective colour differences are calculated and standardized from the colorimetric coordinates of the effect paint and of the colour reference in accordance with the formula

$$<dE_{Lch}> = \sqrt{<dL^*>^2 + <dC^*>^2 + <dh^\circ>^2}$$

for each measurement geometry of the number of measurement geometries and each illuminate used, where the colour differences are standardized in accordance with the formula $<dX^*> = \dfrac{dX^*}{S_x}$ , where X corresponds each to one of the coordinates L, C and h, and where the standardization of the colour differences is subject to the following mathematical relation: $S_L = S_a = S_b = 1/3$, $Sc = (1 + 0.048 \, C_R*)/3$ and $S_h = (1 + 0.014 \cdot C_R*)/3$, where R corresponds to the colour reference and $C_R*$ describes a chroma of the colour reference in the L*a*b* colour space, where:

$$C_R* = \sqrt{(a_R*)^2 + (b_R*)^2}$$

, and where the assignment rule comprises rules which specify that assignment to a scale value 1 is made when a first characteristic value, formed by a sum of all the colour differences between the effect paint and an effect paint reference or colour reference for the measurement geometries 25°, 45° and 75°, is greater than or equal to 12 and respective colour differences between the effect paint and the colour reference, determined for the individual measurement geometries of 25°, 45° and 75° are greater than or equal to 6 when considered each on their own, and where assignment to a scale value 2 is made when the first characteristic value is less than 12 and each of the colour differences determined for the measurement geometries of 25°, 45° and 75° is less than 6, and where assignment to a scale value 3 is made when the first characteristic value is less than 10 and each of the colour differences determined for the measurement geometries of 25°, 45° and 75° is less than 4.5, and where assignment to a scale value 4 is made when the first characteristic value is less than 6 and each of the colour differences determined for the measurement geometries of 25°, 45° and 75° is less than 3, and where assignment to a scale value 5 is made when the first characteristic value is less than 3.9 and each of the colour differences determined for the measurement geometries of 25°, 45° and 75° is less than 2, and where assignment to a scale value 6 is made when a second characteristic value, formed by a sum of all the colour differences between the effect paint and the colour reference for the measurement geometries of 15°, 25°, 45°, 75° and 110°, is less than 6.5 and each of the colour differences determined for the measurement geometries of 15°, 25°, 45°, 75° and 110° is less than 2, and where assignment to a scale value 7 is made when the second characteristic value is less than 6.5, each of the colour differences determined for the measurement geometries of 15°, 25°, 45°, 75° and 110° is less than 1.73 and each sparkle difference between the effect paint and the colour reference, determined for the measurement geometries of 15°, 45° and 75°, is less than 1.73 and a graininess difference between the effect paint and the colour reference is less than 1.73, and where assignment to a scale value 8 is made when the second characteristic value is less than 6.5 and each of the colour differences formed for the measurement geometries of -15°, 15°, 25°, 45°, 75° and 110° is less than 1.41 and each sparkle difference between the effect paint and the colour reference, determined for the measurement geometries of 15°, 45° and 75° is less than 1.41 and the graininess difference between the effect paint and the colour reference is less than 1.41, where the assignment rule is extended for corresponding sparkle differences and/or graininess differences between effect paint and colour reference, and where respective sparkle differences and graininess differences are divided by the angle-specific tolerance $S_x$ and are thereby standardized, and where assignment to a scale value 1 takes place whenever respective assignment rules are not met for any higher scale value.

3. Method according to Claim 1 or 2, **characterized in that** the colour differences for achromatic and/or chromatic colorimetric coordinates are calculated with respective colour difference formulae.

4. Computer program with program code means to implement all steps of a method according to any of Claims 1 to 3 when the computer program is executed on a computer or corresponding computer unit in combination with a spectrophotometer.

5. Computer program according to Claim 4, stored on a computer-readable data medium.

6. Use of a method according to any of Claims 1 to 3 for determining the shade adjustment quality of a vehicle paint on the basis of a colour reference applied to a vehicle.

**Revendications**

1. Procédé de détermination d'un indice destiné à caractériser la qualité d'un ajustement de nuance de couleur d'une peinture unie par rapport à une référence de couleur, les coordonnées colorimétriques de la peinture unie et de la référence de couleur étant déterminées au moyen d'un spectrophotomètre pour un certain nombre de géométries de mesure et à l'aide d'au moins deux types de lumière et des différences de couleur respectives étant calculées et normalisées à partir des coordonnées colorimétriques de la peinture unie et de la référence de couleur pour chaque géométrie de mesure du nombre de géométries de mesure et chaque type de lumière utilisé et une valeur d'une échelle étant associée à un nombre d'indices qui sont calculés à partir des différences de couleur normalisées respectives, à l'aide d'une règle d'association à fournir à l'avance afin de déterminer l'indice, **caractérisé en ce**

**que** des différences de couleur respectives peuvent être calculées et normalisées à partir des coordonnées colorimétriques de la peinture unie et de la référence de couleur pour chaque géométrie de mesure du nombre de géométries de mesure et chaque type de lumière utilisé selon la formule

$$\langle dE_{Lch} \rangle = \sqrt{\langle dL^* \rangle^2 + \langle dC^* \rangle^2 + \langle dh^° \rangle^2}$$ , les différences de couleur étant normalisées selon la formule

$$\langle dX^* \rangle = \frac{dX^*}{S_x}$$ , X correspondant à chaque fois à l'une des trois coordonnées L, C et h, et la relation mathématique suivante s'appliquant lors de la normalisation des différences de couleur : $S_L = S_a = S_b = 1/3$, $Sc = (1 + 0{,}048\, C_R^*)/3$ et $S_h = (1 + 0{,}014 \cdot C_R^*)/3$, R correspondant à la référence de couleur et $C_R^*$ décrivant un chroma de la référence de couleur dans l'espace colorimétrique L*a*b*, avec $C_R* = \sqrt{(a_R *)^2 + (b_R *)^2}$ , et la règle d'association comprenant des règles qui spécifient qu'un indice est alors associé à une valeur d'échelle de 1 comme valeur maximale de différences de couleur et/ou de différences d'échelle de gris entre la peinture unie et une référence de couleur correspondante qui ont été mesurées à chaque fois avec différents types de lumière pour chaque géométrie de mesure, si l'indice est supérieur ou égal à 6 et l'indice étant ensuite associé à une valeur d'échelle de 2 si l'indice est inférieur à 6, et l'indice étant ensuite associé à une valeur d'échelle de 3 si l'indice est inférieur à 4,5, et l'indice étant ensuite associé à une valeur d'échelle de 4 si l'indice est inférieur à 3, et l'indice étant ensuite associé à une valeur d'échelle de 5 si l'indice est inférieur à 2, et l'indice étant ensuite associé à une valeur d'échelle de 6 si l'indice est inférieur à 1,7, et l'indice étant alors associé à une valeur d'échelle de 7 si l'indice est inférieur à 1,4, et l'indice étant ensuite associé à une valeur d'échelle de 8 si l'indice est inférieur à 1,0, et une association à une valeur d'échelle de 1 étant toujours effectuée si aucune valeur d'échelle supérieure ne satisfait à des règles d'association respectives.

2. Procédé de détermination d'un indice destiné à caractériser la qualité d'un ajustement de nuance de couleur d'une peinture à effet par rapport à une référence de couleur, les coordonnées colorimétriques de la peinture à effet et de la référence de couleur étant déterminées au moyen d'un spectrophotomètre pour un certain nombre de géométries de mesure et à l'aide d'au moins deux types de lumière et des différences de couleur respectives étant calculées et normalisées à partir des coordonnées colorimétriques de la peinture à effet et de la référence de couleur pour chaque géométrie de mesure du nombre de géométries de mesure et chaque type de lumière utilisé et une valeur d'une échelle étant associée à un nombre d'indices qui sont calculés à partir des différences de couleur normalisées respectives, à l'aide d'une règle d'association à fournir à l'avance afin de déterminer l'indice, et des intervalles de scintillement et/ou des écarts de grossièreté respectifs entre la peinture et la référence de couleur, mesurés avec un spectrophotomètre à effet gonio, étant normalisés et utilisés dans le calcul de l'indice, **caractérisé en ce que** des différences de couleur respectives peuvent être calculées et normalisées à partir des coordonnées colorimétriques de la peinture à effet et de la référence de couleur pour chaque géométrie de mesure du nombre de géométries de mesure et chaque type de lumière utilisé selon la formule

$$\langle dE_{Lch} \rangle = \sqrt{\langle dL^* \rangle^2 + \langle dC^* \rangle^2 + \langle dh^° \rangle^2}$$ , les différences de couleur étant normalisées selon la formule

$$\langle dX^* \rangle = \frac{dX^*}{S_x}$$ , X correspondant à chaque fois à l'une des trois coordonnées L, C et h, et la relation mathématique suivante s'appliquant lors de la normalisation des différences de couleur : $S_L = S_a = S_b = 1/3$, $S_C = (1 + 0{,}048\, C_R^*)/3$ et $S_h = (1 + 0{,}014 \cdot C_R^*)/3$, R correspondant à la référence de couleur et $C_R^*$ décrivant un chroma de la référence de couleur dans l'espace colorimétrique L*a*b*, avec $C_R* = \sqrt{(a_R *)^2 + (b_R *)^2}$ , et la règle d'association comprenant des règles qui spécifient qu'une association à une valeur d'échelle de 1 est effectuée seulement si un premier indice, qui est formé par la somme de toutes les différences de couleur entre la peinture à effet et une référence de peinture à effet ou de couleur pour les géométries de mesure de 25°, 45° et 75°, est supérieur ou égal à 12 et les différences de couleur respectives entre la peinture à effet et la référence de couleur qui ont été déterminées pour les géométries de mesure individuelles de 25°, 45° et 75°, sont supérieures ou égales à 6 pour une observation seule respective, et une association à une valeur d'échelle de 2 étant effectuée seulement si le premier indice est inférieur à 12 et si chacune des différences de couleur qui ont été déterminées pour les géométries de mesure de 25°, 45° et 75°, est inférieure à 6, et une association à une valeur d'échelle de 3 étant effectuée seulement si le premier indice est inférieur à 10 et si chacune des différences de couleur, qui ont été déterminées pour les géométries de mesure de 25°, 45° et 75°, est inférieure à 4,5, et une association à une valeur d'échelle de 4 étant effectuée seulement si le premier indice est inférieur à 6 et si chacune des différences de couleur, qui ont été déterminées pour les géométries de mesure de 25°, 45° et 75°, est inférieure à 3, et une association à une valeur d'échelle de 5 étant effectuée seulement si le premier indice est inférieur à 3,9 et si chacune des différences de couleur, qui ont été déterminées pour les géométries de mesure de 25°, 45° et 75°, est inférieure à 2, et une association à une valeur d'échelle de 6 étant effectuée seulement si un deuxième indice, qui est formé par la somme de toutes les différences de couleur entre la peinture à effet et la référence de couleur pour les géométries de mesure de 15°, 25°, 45°, 75° et 110°, est inférieur à 6,5 et si chacune des différences de couleur, qui ont été déterminées pour les géométries de mesure de 15°, 25°, 45°, 75° et 110°, est inférieure à 2, et l'association à une valeur d'échelle de 7 étant effectuée seulement si le deuxième indice est inférieur à 6,5, si chacune des différences de couleur, qui ont été déterminées pour les géométries de mesure de 15°, 25°, 45°, 75° et 110°, est inférieure à 1,73 et si chaque intervalle de scintillement entre la peinture à effet et la référence de couleur, qui a été déterminé pour les géométries de mesure de 15°, 45° et 75°, est inférieur à 1,73 et si un écart de grossièreté entre la peinture à effet et la référence de couleur est inférieur à 1,73, et une association à une valeur d'échelle de 8 étant effectuée seulement si le deuxième indice est inférieur à 6,5 et si chacune des différences de couleur, qui ont été formées pour les géométries de mesure de -15°, 15°, 25°, 45°, 75°, 110° est inférieure à 1,41 et si chaque intervalle de scintillement entre la peinture à effet et la référence de couleur, qui a été déterminé pour les géométries de mesure de 15°, 45° et 75°, est inférieur à 1,41 et si l'écart de grossièreté entre la peinture à effet et la référence de couleur est inférieur à 1,41, la règle d'association pour les intervalles de scintillement et/ou les écarts de grossièreté correspondants entre la peinture à effet et la référence de couleur étant étendue, et les intervalles de scintillement et les écarts de grossièreté respectifs étant divisés par la tolérance angulaire spécifique $S_x$ et ainsi normalisés, et l'association à une valeur d'échelle de 1 étant toujours effectuée si aucune valeur d'échelle supérieure ne satisfait à des règles d'association respectives.

**3.** Procédé selon la revendication 1 ou 2, **caractérisé en ce que** les différences de couleur pour des coordonnées colorimétriques achromatiques et/ou chromatiques sont calculées à l'aide de formules de distance de couleur respectives.

**4.** Logiciel comprenant des moyens de code de programme permettant de réaliser toutes les étapes d'un procédé selon l'une des revendications 1 à 3 lorsque le logiciel est exécuté sur un ordinateur ou une unité de traitement correspondante en combinaison avec un spectrophotomètre.

**5.** Logiciel selon la revendication 4, qui est mémorisé sur un support de données lisible par ordinateur.

**6.** Utilisation d'un procédé selon l'une des revendications 1 à 3 pour déterminer la qualité d'ajustement de nuance de couleur d'une peinture de véhicule à partir d'une référence de couleur appliquée sur un véhicule.

EP 3 218 682 B1

| Q | | | | | |
|---|---|---|---|---|---|
| 1 | <dE>sum(25-75) > = 12 | <dE>25, 45, 75 > = 6 | | | max<dE>(CIE94, 45) > = 6 |
| 2 | <dE>sum(25-75) < 12 | <dE>25, 45, 75 < 6 | | | max<dE>(CIE94, 45) < 6 |
| 3 | <dE>sum(25-75) < 10 | <dE>25, 45, 75 < 4,5 | | | max<dE>(CIE94, 45) < 4,5 |
| 4 | <dE>sum(25-75) < 6 | <dE>25, 45, 75 < 3 | | | max<dE>(CIE94, 45) < 3 |
| 5 | <dE>sum(25-75) < 3,9 | <dE>25, 45, 75 < 2 | | | max<dE>(CIE94, 45) < 2 |
| 6 | <dE>sum(15-110) < 6,5 | <dE>15, 25, 45, 75, 110 < 2 | | | max<dE>(CIE94, 45) < 1,7 |
| 7 | | <dE>15, 25, 45, 75, 110 < 1,73 | <dS>15, 45, 75 < 1,73 | <dG> < 1,73 | max<dE>(CIE94, 45) < 1,4 |
| 8 | | <dE>-15, 15, 25, 45, 75, 110 < 1,41 | <dS>15, 45, 75 < 1,41 | <dG> < 1,41 | max<dE>(CIE94, 45) < 1,0 |

Fig. 1

Fig. 2

| | | <MDE> | Q |
|---|---|---|---|
| 01_DE02-2014-00730_PLATINUM GREY SOLUTION | ... | 3,70 | 3 |
| 02_DE02-2014-00730_PLATINUM GREY SOLUTION | ... | 1,66 | 4 |
| 03_DE02-2014-00730_PLATINUM GREY SOLUTION | ... | 1,81 | 4 |
| 04_DE02-2014-00730_PLATINUM GREY SOLUTION | ... | 1,51 | 5 |
| 05_DE02-2014-00730_PLATINUM GREY SOLUTION | ... | 0,95 | 6 |

21 23 25 5

Fig. 3

40

41                                                                43

| | | | | Q |
|---|---|---|---|---|
| 01_DE02-2014-00933_FIR GREEN SOLUTION | ... | ... | ... | 1 |
| 02_DE02-2014-00933_FIR GREEN SOLUTION | ... | ... | ... | 3 |
| 03_DE02-2014-00933_FIR GREEN SOLUTION | ... | ... | ... | 4 |
| 04_DE02-2014-00933_FIR GREEN SOLUTION | ... | ... | ... | 7 |
| 05_DE02-2014-00933_FIR GREEN SOLUTION | ... | ... | ... | 8 |

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013049796 A1
- DE 10208696 A1
- US 2011013176 A1
- US 5740078 A